# EUROPEAN PATENT SPECIFICATION

(11) **EP 3 741 668 B1**
(45) Date of publication and mention of the grant of the patent: **05.07.2023**
(21) Application number: 19176248.3
(22) Date of filing: 23.05.2019
(51) Int. Cl.: F15D 1/12, B64C 23/06, B64C 21/08, F15D 1/00

(54) **METHOD FOR ACTIVE FLOW CONTROL, FLOW BODY, AND AIRCRAFT**
VERFAHREN ZUR AKTIVEN STRÖMUNGSSTEUERUNG, STRÖMUNGSKÖRPER SOWIE FLUGZEUG
PROCÉDÉ DE RÉGULATION ACTIVE DE FLUX, CORPS DE FLUX ET AÉRONEF

(43) Date of publication of application: 25.11.2020
(73) Proprietor: Airbus Defence and Space GmbH, 82024 Taufkirchen (DE); Airbus Operations GmbH, 21129 Hamburg (DE)
(72) Inventor: LANGENBACHER, Peter, 82024 Taufkirchen (DE); STEFES, Bruno, 21129 Hamburg (DE)
(74) Representative: Isarpatent

(56) References cited:
- EP-A1- 3 144 221
- US-A1- 2014 182 695
- US-A1- 2018 162 521
- Markus Blechschmidt: "Active Separation Control By Multiple Cooperative Actuation", , 22 December 2016 (2016-12-22), XP055615469, Retrieved from the Internet: URL:https://pdfs.semanticscholar.org/9bc7/ 367607ef80abb79d8eecedf62e35457b2f23.pdf [retrieved on 2019-08-26]
- MARKUS BLECHSCHMIDT ET AL: "Separation Control With Cooperative Actuation", 54TH AIAA AEROSPACE SCIENCES MEETING, 2 January 2016 (2016-01-02), XP055615475, Reston, Virginia DOI: 10.2514/6.2016-0054 ISBN: 978-1-62410-393-3

## Description

### FIELD OF THE INVENTION

The present invention pertains to a method for active flow control, a flow body, and an aircraft.

Although applicable for any kind of fluid flow fields or structures subject to a fluid flow, the present invention and the corresponding underlying problems will be explained in further detail in conjunction with aircrafts.

### BACKGROUND OF THE INVENTION

Flow bodies such as wings or control surfaces of an aircraft typically require a fully attached flow to work properly in a variety of flow conditions. For example, flow surfaces of wings of an aircraft are optimized for high flow velocities that occur during a cruise flight phase in high altitudes. However, during starting and landing phases, the wings are required to provide lift at low flow velocities and, typically, are positioned with a high pitch angle. In order to meet these requirements and to prevent stall or flow separation in particular at high pitch angles, todays aircraft wings are equipped with high-lift devices, e.g. slats and flaps arranged at a leading edge of the wing, the slats being extendable from the leading edge allowing an overflow of air from a pressure side of the wing to a suction side of the wing, wherein the overflowing air energizes the flow on the suction side and thereby prevents flow separation. Further, wings comprising so called Krueger flaps or so called droops are known. This type of flap is arranged at a leading edge of the wing and is movable so as to locally reduce an angle of attack of the fluid flow.

Moreover, fluidic actuators may be employed for preventing flow separation. Typically, fluidic actuators are coupled to openings in the flow surface and configured to eject continuous or pulsed jets into the flow flowing over the flow surface in order to energize the boundary layer of the flow to prevent flow separation.

EP 3 144 221 A1 describes a cooperative actuator system with first row of actuators and a second row of actuators positioned downstream of the first row, the actuators being configured to eject pulsed air flow. The first row introduces a first flow structure, i.e. a vortex structure, into a fluid flow flowing over a flow surface and the second row of actuators is controlled based on a measured propagation of the first flow structure so as to amplify the first flow structure.

The Dissertation of Markus Blechschmidt, "Active Separation Control By Multiple Cooperative Actuation", December 22, 2016, describes introducing a first vortex into a flow at a first actuation site and merging said first vortex with a second vortex introduced at a second actuation site lying downstream of the first actuation site, with the purpose of amplifying the vorticity and duration of the resulting, merged vortex. For experimental purposes, it has been tested to introduce the second vortex after a point of time when the first vortex reaches the second actuation site. With this setup, the first and the second vortices show destructive behaviour.

### SUMMARY OF THE INVENTION

It is one of the objects of the invention to provide improved, in particular robust and reliable solutions for active flow control.

According to a first aspect of the invention, a method for active flow control of a fluid flow that flows along a flow surface in accordance with claim 1 is provided.

According to a second aspect of the invention a flow body system in accordance with claim 6 is provided. According to this aspect of the invention, the flow body system includes a controller configured to control the first flow control actuators in accordance with a method according to the first aspect of the invention. That is, the controller is configured to control the first actuators to generate a first local velocity field in a fluid flow flowing along the flow surface along the second direction by introducing a first vortex structure into the fluid flow, and to control the second flow control actuators to introduce a second vortex structure into the first local velocity field, when a head vortex of the first vortex structure has propagated with the fluid flow downstream the row of second openings.

According to a third aspect of the invention, an aircraft comprising a flow body system according to the second aspect is provided. The flow body may form a wing of the aircraft, a part of the wing, a vertical stabilizer, a horizontal stabilizer, or another structure of the aircraft subject to a fluid flow.

It is one of the ideas of the present invention to generate a first vortex structure in a fluid flow, e.g. a horseshoe vortex having a head vortex and two lateral longitudinal vortices, at a first location, and to generate a second vortex structure, e.g. another horseshoe vortex, at a second location downstream of the first location somewhat after the head vortex of the first vortex structure has passed the second location. By introducing the first vortex structure, which may for example be done by continuously or pulsed ejecting a high velocity fluid jet from a slit shaped first opening into the boundary layer of the fluid flow, a local velocity field is generated upstream of the head vortex which propagates downstream with the fluid flow. The first actuators thus energize the boundary layer of the outer, free stream flow, e.g. by blowing out a jet of fluid, and create a local high-velocity field where the velocity is higher than in the free stream flow or at least higher than the velocity in the boundary layer of the freestream flow. Thereby, the fluid flow is energized within the local velocity field and, hence, comprises a velocity that is greater than in the surrounding boundary layer. When the head vortex of the first vortex structure has passed the second location, e.g. a second opening downstream of the first opening, the local velocity field of the first vortex structure is still present upstream and downstream of the second location and, thus, a second vortex structure can be generated in the energized local velocity field, e.g. by ejecting a high velocity fluid jet from the slit shaped second opening into the local velocity field.

For generating the first and second vortex structures, first and second flow control actuators are used, wherein one flow control actuator is coupled or connected to at least one actuation site. The flow control actuators may for example be configured to eject a control fluid through openings in the flow surface and comprise corresponding flow control structures such as nozzles, diffusors, flaps, valves, membranes, or similar structures configured to control a flow of a fluid. In this case, the flow control actuators may be coupled to a source of high pressure fluid, e.g. a reservoir or a pressure generator such as pump or compressor. It is also possible, e.g. in an aircraft, to connect the actuators to an opening forming a stagnation point, for example an opening provided at a leading edge of a wing. Alternatively, the first and second actuators may also be realized as plasma actuators. In this case, an electrode arrangement may be positioned at each actuation site, wherein the electrode arrangements are connected to an electric voltage source and configured to generate plasma between a pair of asymmetric electrodes. Generally, the first and second flow control actuators may also form a common structure, e.g. in the form of a fluidic oscillator.

For timing and activating the actuators, a controller may be used, e.g. a micro controller or, generally, a processing unit configured to generate control commands based on which the flow control actuators are activated, e.g. to generate plasma or to eject fluid. The controller may comprise a non-volatile data memory, such as a flash memory or similar, and a processing unit, such as a CPU, an FPGA, an ASIC, or similar. The controller is communicatively coupled or connected to the flow control actuators, e.g. via a data connection such as a bus system. The controller may comprise an input interface for receiving data, e.g. data representing state variables of the fluid flow, such as velocity, angle of attack, and similar. Optionally, the controller is configured to generate control commands based on the data received at the input interface.

It is one of the advantages of the present invention that the second vortex structure is introduced into the local high-velocity field of the first vortex structure since, thereby, a gradient between the second vortex structure and the fluid of the fluid flow is reduced. In other words, the second vortex structure is introduced in an energized local flow field with high velocity instead of being introduced into the boundary layer of the free stream flow. Thereby, the second vortex structure is highly energized and, consequently, remains stable and energized over a long distance downstream of the second opening. Thereby, the second vortex structure efficiently energizes the boundary layer of the fluid flow over a long distance and, hence, efficiently prevents flow separation.

Another advantage lies in that the method is robust with respect to varying flow conditions. This is mainly based on the effect that the first vortex structure when propagating downstream with the fluid flow laterally grows or widens. Thereby, the second vortex structure can be easily placed within the first local velocity field. Since the first local velocity field, based on a duration of activation of the first actuator, e.g. a duration of ejecting control fluid at the first ejection site, comprises a certain expanse in the flow direction of the fluid flow ejecting control fluid at the second ejection site or openings can be timed with relatively high tolerances while the second vortex structure is still reliably placed within the first local velocity field. Consequently, there is not necessarily a need to measure propagation of the head vortex of the first vortex structure but the second flow control actuators may be activated by the controller based on internal controller data, e.g. after a predefined lapse of time after activating the first flow control actuators. Thus, the method and the fluid body is highly fail safe.

Related to aircrafts, the flow body may form a wing or part of a wing or a control surface. One advantage of the present invention is that slats possibly can be omitted or at least locally replaced when the flow body forms part of the wing, in particular a leading edge of the wing in the region of a slat end at the outer wing, or in the region of an engine-wing coupling or at the leading edge of a trailing edge flap.

It should be understood that features and advantages described in connection with one aspect of the invention are also disclosed for the other aspect of the invention and vice versa. In particular, the flow body system may perform the method steps of the method according to the first aspect of the invention.

According to the invention, the method further comprises introducing a third vortex structure into the first local velocity field by means of a third flow control actuator coupled to a third actuation site of the flow surface located downstream of the second ejection site, when the head vortex of the first vortex structure has propagated with the fluid flow downstream the third ejection site. For example, the second and the third vortex structures may be generated by simultaneously activating the second and third actuators, e.g. to eject control fluid at the second and third actuation sites. However, it is also possible to activate the third actuator after starting activating the second actuator. By introducing second and third vortices structures into the local high-velocity field at consecutive locations, a plurality of consecutive high energized vortices can be generated which further helps to prevent flow separation.

According to the invention, the third vortex structure is introduced into the first local velocity field after a second local velocity field generated by introducing the second vortex structure has propagated downstream the third actuation site. Hence, the second actuator may be activated to generate the second vortex structure and a corresponding second local high-velocity field only for a short period of time. The first actuator may be kept activated during activation of the second actuator and after deactivation of the second actuator. When the second local high-velocity field has propagated downstream the third actuation site, the third actuator is activated, e.g. to eject control fluid. Alternatively, the third vortex structure is introduced into the first local velocity field before a head vortex of the second vortex structure has reached the third actuation site. In both alternatives, a series of consecutive, highly energized vortices are produced by merely shortly activating the second and third actuators, that is, with short duty cycles. Thereby, the vortices can be efficiently generated.

According to another example not covered by the invention, the method further comprises introducing a third vortex structure into a second local velocity field generated by introducing the second vortex structure, the third vortex structure being introduced by means of a third flow control actuator coupled to a third actuation site of the flow surface downstream of the second actuation site, when a head vortex of the second vortex structure has propagated with the fluid flow downstream the third actuation site. Similar to the first vortex structure, also the second vortex structure may be a horseshoe vortex which defines a second local field of high velocity upstream of its head vortex. When a further, third vortex structure is introduced in said second local velocity field at a location downstream of the second actuation site, e.g. by ejecting control fluid through third openings, the third vortex structure is stabilized and highly energized and, hence, may travel downstream over a long distance which further helps to prevent flow separation.

According to a further example not covered by the invention, the third vortex structure may be introduced into the second local velocity field after the first local velocity field has propagated downstream the third actuation site. That is, the first actuator may be active over a first period of time to generate the first local velocity field into which the second vortex structure is placed at the second actuation site. When the first actuator is deactivated, the first local velocity field propagates downstream and passes the second and third actuation sites, e.g. a second and a third opening of the flow surface. The second actuator is still active and generates a second local velocity field, e.g. by ejecting fluid through a second opening of the flow surface. According to one embodiment, the third vortex structure is introduced at a point of time when the first local velocity field has already passed the third actuation site so that the third vortex structure is placed into the second local velocity field. Alternatively, the third vortex structure may be introduced into the second local velocity field when the first local velocity field is still present upstream and downstream of the third actuation site so that the third vortex structure is placed into the second local velocity field which superimposes the first local velocity field.

According to one embodiment, the method further comprises introducing a fourth vortex structure into the fluid flow by means of the first flow control actuator, e.g. by ejecting control fluid at the first actuation site, wherein the third flow control actuator continuously generates a third local velocity field, e.g. by continuously ejecting control fluid, until a head vortex of the fourth vortex structure has propagated downstream the third actuation site with the fluid flow. For example, control fluid may subsequently ejected at the first, the second, and the third actuation sites or openings in a pulsed fashion, wherein control fluid is ejected at the first actuation site over a predefined first period of time, wherein control fluid is ejected at the second actuation site over a predefined second period of time when the head vortex of the first vortex structure has passed the second actuation site, wherein control fluid is ejected at the third actuation site over a predefined third period of time when the head vortex of the second vortex structure has passed the third actuation site, wherein control fluid is ejected at the first actuation site again after the predefined first period of time has ended and after a predefined delay to generate a fourth vortex structure, optionally after starting ejection of control fluid at the third actuation site, and wherein the predefined third period of time is sufficiently long for a head vortex of the fourth vortex structure to reach or pass the third actuation site. In other words, a third vortex structure is introduced into the first or second local velocity field at a location downstream of the second actuation site, e.g. by ejecting control fluid, and a fourth vortex structure is generated at the first actuation site and allowed to travel into the local high velocity field of the third vortex structure. Thereby, the fourth vortex structure is stabilized and able to travel downstream over a long distance helping to prevent flow separation.

According to a further embodiment, the method comprises capturing a free stream velocity of the fluid flow upstream of the first actuation site, and controlling a delay of activating the second actuator, e.g. to eject control fluid at the second actuation site, and optionally also a delay of activating the third actuator, e.g. to eject control fluid at the third actuation site, based on the captured free stream velocity. A delay, that is, a point of time when control fluid is ejected at the second and, optionally, the third actuation site may be determined based on a captured free stream velocity of the fluid flow. Optionally, also a first, second, or third time period or predefined period of time during which control fluid is ejected at the first, second, or third actuation site may be controlled based on the captured free stream velocity. The delays and the periods of time are also dependent on a spacing of the actuation sites along the direction of flow.

According to another embodiment of the method, a delay activating the second actuator, e.g. to eject control fluid at the second actuation site, and optionally also a delay of activating the third actuator, e.g. to eject control fluid at the third actuation site, is controlled according to a predefined schedule. That is, fixed activation timing may be provided for the actuators. This allows for a very easy and fail safe control of the actuators.

According to an embodiment of the flow body system, the first actuation sites may be formed by openings formed in the flow surface, wherein the first flow control actuators are coupled to the first openings and configured to eject control fluid through the first openings for generating the first vortex structures and the corresponding first local velocity fields, and wherein the second actuation sites are formed by second openings formed in the flow surface, wherein the second flow control actuators are coupled to the second openings and configured to eject control fluid through the second openings for generating the second vortex structures and the corresponding second local velocity fields. In other words, the flow body comprises a row of first openings formed in the flow surface and a row of second openings positioned spaced to the first openings in the second direction. The first flow control actuators are fluid conductively coupled to the first openings and the second flow control actuators are fluid conductively coupled to the second openings. The first and second actuators are configured to eject control fluid, e.g. pressurized air, through the first and second openings, respectively. For example, the first and second actuators may comprise corresponding control structures such as valves, flaps, membranes, nozzles, diffusors, or similar to allow pulsed or continuous ejection of fluid.

According to another embodiment, the first actuators and the second actuators may be realized as plasma actuators. The first and second actuators, for example, each may comprise an electrode arrangement positioned at a respective actuation site on the flow surface, wherein the electrode arrangements are connected to an electric voltage source and configured to generate plasma between a pair of asymmetric electrodes of the respective electrode arrangement.

According to the invention, the flow body comprises a group of third flow control actuators being coupled to the flow surface at a row of third actuation sites and being configured to generate third vortex structures and corresponding third local velocity fields, the third actuation sites being spaced to oneanother in the first direction and being positioned spaced to the row of second actuation sites in the second direction, wherein the controller is communicatively connected to the group of third flow control actuators. Hence, the flow body may comprise at least three rows of actuation sites spaced in the second direction and coupled to respective individually controlled flow control actuators. As explained in detail above in connection with the method of the first aspect, thereby, series of consecutive, highly-energized vortices can be efficiently generated which helps to further prevent flow separation.

According to one embodiment, the third actuation sites are formed by third openings formed in the flow surface, wherein the third actuators are configured to eject control fluid through the third openings for generating the third vortex structures and the corresponding third local velocity fields. Hence, the flow body may comprise a row of third openings formed in the flow surface, the third openings being spaced to oneanother in the first direction and being positioned spaced to the row of second openings in the second direction, and a group of third flow control actuators coupled to the third openings and configured to eject a control fluid through the third openings, wherein the controller is communicatively connected to the group of third flow control actuators. That is, the flow body may comprise at least three rows of openings, each opening forming an actuation or ejection site for ejecting control fluid by aid of a flow control actuator coupled or connected to the respective opening, the rows being positioned spaced and may extend substantially parallel to each other.

Alternatively, the third actuators may also be realized as plasma actuators as described above for the first and second actuators.

As explained above in connection with the method, the controller may be configured to control the third actuators to eject control fluid or to generate plasma for introducing a third vortex structure into the first local velocity field, when the head vortex of the first vortex structure has propagated with the fluid flow downstream the row of third actuation sites.

Further, the controller may be configured to control the optional third actuators to eject control fluid or to generate plasma for introducing a third vortex structure into a second local velocity field generated by introducing the second vortex structure, when a head vortex of the second vortex structure has propagated with the fluid flow downstream the row of third actuation sites.

Moreover, the controller may also be configured to control the first actuators to eject control fluid or to generate plasma for introducing a fourth vortex structure into the fluid flow, and to control the optional third actuators to continuously eject control fluid or to continuously generate plasma until a head vortex of the fourth vortex structure has propagated downstream the row of third openings.

According to a further embodiment, the flow body system may comprise a sensor device configured to capture a free stream velocity of the fluid flow, the sensor device being arranged upstream of the row of first openings with respect to the second direction, wherein the controller is communicatively connected to the sensor device and configured to control the second actuators and, optionally, the third actuators to be activated, e.g. to eject control fluid or to generate plasma, with a delay based on the captured free stream velocity. The sensor device may comprise one or more velocity sensors, e.g. pitot heads or similar. Optionally, the sensor device may also comprise sensors configured to capture an angle of attack of the fluid flow relative to the second direction.

According to another embodiment the controller may be configured to read a data memory storing a lookup table storing a predefined schedule for activating the first and second actuators. For example, the controller may comprise a data memory storing the lookup table or may read an external data memory. For example, the lookup table may include a series of subsequent time steps, wherein an activation state of each actuator, e.g. "activated" or "deactivated", is assigned to each time step. The controller, for example, may store software to generate the lookup table based on an input received via an optional input interface, the input including an expected free stream velocity of the fluid flow and a predetermined angle of attack for each time step. In an aircraft, for example, the free stream velocity and the angle of attack may be determined based on a required lift of the aircraft and a predefined curve of climb of the aircraft.

With respect to directions and axes, in particular with respect to directions and axes concerning the extension or expanse of physical structures, within the present disclosure, an extent of an axis, a direction, or a structure "along" another axis, direction, or structure may define that said axes, directions, or structures, in particular tangents which result at a particular site of the respective structures, enclose an angle which is smaller than 45 degrees, preferably smaller than 30 degrees and in particular preferable extend parallel to each other.

With respect to directions and axes, in particular with respect to directions and axes concerning the extension or expanse of physical structures, within the present disclosure, an extent of an axis, a direction, or a structure "crossways", "across", "cross", or "transverse" to another axis, direction, or structure may define that said axes, directions, or structures, in particular tangents which result at a particular site of the respective structures, enclose an angle which is greater or equal than 45 degrees, preferably greater or equal than 60 degrees, and in particular preferable extend perpendicular to each other.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates a partial cross-sectional view flow body system according to an embodiment of the invention.
- Fig. 2: schematically illustrates an aircraft according to an embodiment of the invention.
- Fig. 3: schematically illustrates a cross-sectional view of a flow body at subsequent points of time (A) to (F) in a method according to an example not covered by the invention.
- Fig. 4: schematically illustrates a top view to the flow body of Fig. 3 at time step (D) according to the example of Fig. 3 not covered by the invention.
- Fig. 5: schematically illustrates a top view of a flow body at subsequent points of time (A) to (C) in a method according to an embodiment of the invention.
- Fig. 6: schematically illustrates a top view of a flow body at subsequent points of time (A) to (F) in a method according to an example not covered by the invention.
- Fig. 7: schematically illustrates a diagram showing a volume flow of control fluid ejected by flow control actuators of a flow body according to an embodiment of the invention, the diagram showing the volume flow versus time.
- Fig. 8A: shows a PIV image obtained in an experimental setup of a flow body system.
- Fig. 8B: shows another PIV image obtained in the experimental setup of Fig. 8A at a later point of time.
- Fig. 9A: shows another PIV image obtained in the experimental setup of Fig. 8A at a later point of time than in Fig. 8B.
- Fig. 9B: shows another PIV image obtained in the experimental setup of Fig. 8A at a later point of time than in Fig. 9A.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention as defined in the claims.

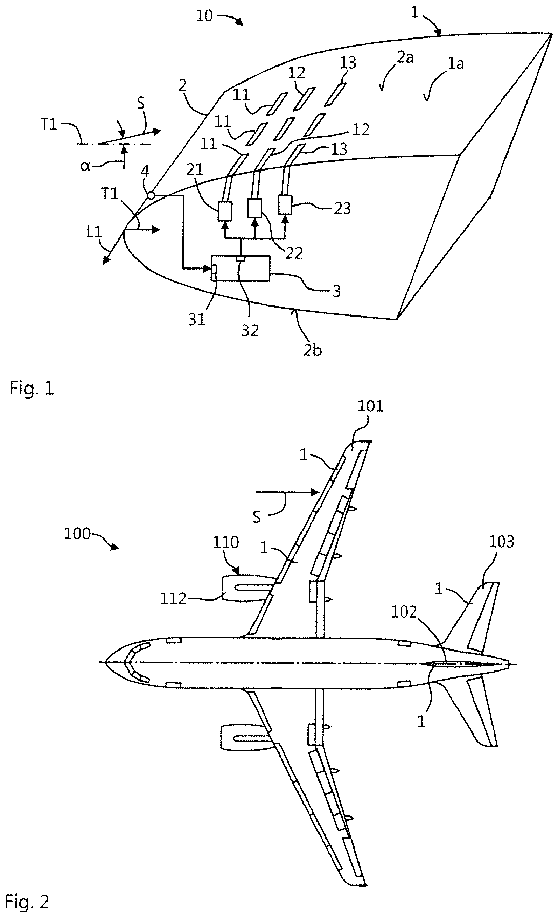

Fig. 1 exemplarily shows a flow body system 10 comprising a flow body 1, a plurality of flow control actuators 21, 22, 23, a controller 3, and an optional sensor device 4. In the example of Fig. 1, the flow body comprises a leading edge 2 extending in a first direction L1, also referred to as the body longitudinal or spanwise direction L1. The flow body 1 comprises a first, upper surface 2a extending from the leading edge 2 along a second direction T1, also referred to as the chordwise or body transverse direction T1, and a second, lower surface 2b extending from the leading edge 2 along the second direction T1 and being oriented opposite to the first surface 2a. The first and the second surface 2a, 2b may define a bow shaped cross-section of the flow body 1, as is exemplarily shown in Fig. 1. In the example of Fig. 1, the first and second surfaces 2a, 2b form flow surfaces along which a fluid flow S may flow. Generally, the flow body 1 comprises or defines a flow surface 1a. The flow body 1 exemplarily shown in Fig. 1 may form an aerodynamic body of an aircraft 100, as exemplarily shown in Fig. 2. For example, the flow body 1 may be part of a wing 101 of the aircraft 100, of a vertical stabilizer 102 of the aircraft 100, of a horizontal stabilizer 103 of the aircraft 100, or of an engine housing 112. However, it should be noted that the flow body 1 may also form part of any other structure subjected to a fluid flow, e.g. a body forming a surface of a vehicle such as a car, body forming a surface of a ship, a fluid pipe, gas turbines, turbo engines, or similar. In the example of Fig. 1, the first surface 2a defines a suction side of the flow body 1 and the second surface 2b defines a pressure side of the flow body 1.

As is schematically illustrated in Fig. 1, the flow body 1 comprises a row of first openings 11, a row of second openings 12, and an optional row of third openings 13. It should be understood that the number of rows of openings is not limited to three or any specific number. In particular, the flow body 1 comprises at least one row of first openings and one row of second openings and may comprise three, four, or any number of rows, e.g. up to 100 rows of openings in total.

The first openings 11 are formed in the flow surface 1a and may be realized as rectangular slits extending in the first direction L1 as exemplarily shown in Fig. 1. The slits may comprise a length with respect to the first direction L1 that is greater than a width of the slits with respect to the second direction T1. For example, an aspect ratio between the length and the width of the slits may lie within a range between 2:1 and 50:1. In the example of Fig. 1, the first openings 11 are formed in the first surface 2a of the flow body 1. As shown in Fig. 1, the first openings 11 are spaced to one another in the body longitudinal direction L1 so as to form a row.

The second openings 12 are formed in the flow surface 1a and may be realized as rectangular slits extending in the first direction L1 as exemplarily shown in Fig. 1. The slits forming the second openings 12 may be formed with the same or similar geometry as the slits forming the first openings 11. In the example of Fig. 1, the second openings 12 are formed in the first surface 2a of the flow body 1. As shown in Fig. 1, the second openings 12 are spaced to one another in the first direction L1 so as to form a row. Further, the second openings 12 are positioned spaced or distanced to the first openings 11 in the second direction T1. In particular, the second openings 12 may be positioned aligned with the first openings 11 with respect to the first direction L1.

The third openings 13 are formed in the flow surface 1a and may be realized as rectangular slits extending in the first, body longitudinal direction L1 as exemplarily shown in Fig. 1. The slits forming the third openings 13 may be formed with the same or similar geometry as the slits forming the first or second openings 11, 12. In the example of Fig. 1, the third openings 13 are formed in the first surface 2a of the flow body 1. As shown in Fig. 1, the third openings 13 are spaced to one another in the first direction L1 so as to form a row. Further, the third openings 13 are positioned spaced or distanced to the second openings 12 in the second, body transverse direction T1. In particular, the second openings 12 may be positioned aligned with the first openings 11 with respect to the first direction L1.

The group of first flow control actuators 21 comprises a number of flow control actuators that may correspond to the number of first openings 11. The first flow control actuators 21 are coupled to the first openings 11 and are configured to eject a control fluid through the first openings 11. Generally, one actuator 21 may be coupled to one or more openings 11. The first flow control actuators 21 may be connected to the first openings 11 via ducts, as schematically shown in Fig. 1. The first flow control actuators 21 may be coupled to a source of pressurized control fluid (not shown). In an aircraft 100, the first control actuators 21 may be coupled to a bleed air interface of a an engine 110 of the aircraft, for example. The first flow control actuators 21, which are only schematically illustrated in Fig. 1 as a block, may comprise flow control structures such as flaps or similar that are configured to control a volume flow of control fluid. Thereby, the first flow control actuators 21, upon activation, may eject a jet of control fluid through the first openings 11. For example, the first openings 11 may be defined such that the control fluid is ejected with a predefined angle relative to the flow surface 1a, e.g. an angle smaller or equal then 90 degree and greater or equal than 10 degree. The first openings 11, hence, form first ejection or actuation sites of the flow surface 1a. Alternatively, the first flow control actuators 21 may be realized as plasma actuators comprising a row of first electrode arrangements (not shown) configured to generate a plasma, wherein the first electrode arrangements are arranged on the flow surface 1a, i.e. the first surface 2a, spaced to each other in the first direction. Thus, generally, the first flow control actuators 21 are coupled to the flow surface 1a at a row of first actuation sites 11 being spaced to oneanother in the first direction L1.

The group of second flow control actuators 22 comprises a number of flow control actuators that may correspond to the number of second openings 12. The second flow control actuators 22 are coupled to the second openings 12 and are configured to eject a control fluid through the second openings 12. Generally, one actuator 22 may be coupled to one or more openings 12. The second flow control actuators 22 may be connected to the second openings 12 via ducts, as schematically shown in Fig. 1. The second flow control actuators 22 may be coupled to a source of pressurized control fluid (not shown). In an aircraft 100, the second control actuators 22 may be coupled to a bleed air interface of a an engine 110 of the aircraft 100, for example. The second flow control actuators 22, which are only schematically illustrated in Fig. 1 as a block, may comprise flow control structures such as flaps or similar that are configured to control a volume flow of control fluid. Thereby, the second flow control actuators 22, upon activation, may eject a jet of control fluid through the second openings 12. For example, the second openings 12 may be defined such that the control fluid is ejected with a predefined angle relative to the flow surface 1a, e.g. an angle smaller or equal then 90 degree and greater or equal than 10 degree. The second openings 12, hence, form second ejection or actuation sites of the flow surface 1a. Alternatively, the second flow control actuators 22 may be realized as plasma actuators comprising a row of second electrode arrangements (not shown) configured to generate a plasma, wherein the second electrode arrangements are arranged on the flow surface 1a, i.e. the first surface 2a, spaced to each other in the first direction and spaced to the first electrode arrangements in the second, chordwise direction T1. Thus, generally, the second flow control actuators 22 are coupled to the flow surface 1a at a row of second actuation sites 12 being spaced to oneanother in the first direction L1.

The group of third flow control actuators 23 comprises a number of flow control actuators that may correspond to the number of third openings 13. The third flow control actuators 23 are coupled to the third openings 13 and are configured to eject a control fluid through the third openings 13. Generally, one actuator 23 may be coupled to one or more openings 13. The third flow control actuators 23 may be connected to the third openings 13 via ducts, as schematically shown in Fig. 1. The third flow control actuators 23 may be coupled to a source of pressurized control fluid (not shown). In an aircraft 100, the third flow control actuators 23 may be coupled to a bleed air interface of a an engine 110 of the aircraft 100, for example. The third flow control actuators 23, which are only schematically illustrated in Fig. 1 as a block, may comprise flow control structures such as flaps or similar that are configured to control a volume flow of control fluid. Thereby, the third flow control actuators 23, upon activation, may eject a jet of control fluid through the third openings 13. For example, the third openings 13 may be defined such that the control fluid is ejected with a predefined angle relative to the flow surface 1a, e.g. an angle smaller or equal then 90 degree and greater or equal than 10 degree. The third openings 13, hence, form third ejection or actuation sites of the flow surface 1a. Alternatively, the third flow control actuators 23 may be realized as plasma actuators comprising a row of third electrode arrangements (not shown) configured to generate a plasma, wherein the third electrode arrangements are arranged on the flow surface 1a, i.e. the first surface 2a, spaced to each other in the first direction L1 and spaced to the first electrode arrangements in the second, chordwise direction T1. Thus, generally, the third flow control actuators 23 are coupled to the flow surface 1a at a row of third actuation sites 13 being spaced to oneanother in the first direction L1.

In Fig. 1, the first, second, and third actuators 21, 22, 23 are exemplarily and schematically shown as separate structures. However, it should be understood that one or more actuators 21, 22, 23 may also be coupled to each other to form a common structure. For example, the first and second actuators 21, 22, and optionally also the third actuators may be integrated to form a fluidic oscillator, e.g. such as described in DE 10 2015 226 471 A1.

The controller 3 is only schematically shown in Fig. 1 as block and may comprise a processing unit (not shown), such as a CPU, an FPGA, or an ASIC, and a non-volatile data memory (not shown) readable by the processing unit, such as a flash memory, a hard drive, or similar. The controller 3 is configured to generate control commands, e.g. by the processing unit, and provide theses commands at an output interface 32. Optionally, the controller 3 may comprise an input interface 31 for receiving data of external sources. For example, the controller 3 may generate control commands based on input data received at the input interface 31. The controller 3 may alternatively or additionally generate control commands based on data received from the data memory.

As schematically shown in Fig. 1, the controller 3 is communicatively connected to the first and second flow control actuators 21, 22 and the optional third flow control actuators 23, and, given, any further optional flow control actuators. The controller 3 may be connected to the actuators 21, 22, 23 by a wire bound data connection, e.g. via a BUS system. In Fig. 1, the controller 3 is exemplarily shown to be integrated into the fluid body 1. It should be understood that the controller 3 may also be realized and arranged separately from the fluid body 1. For example, the controller 3 may be part of a control system of the aircraft 100.

The optional sensor device 4 may comprise one or more sensors, wherein at least one of those sensors, e.g. a pitot tube, is configured to capture a free stream velocity of a fluid flow S flowing along the flow surface 1. In the example of Fig. 1, the sensor device 4 is arranged at the leading edge 2 of the flow body 1. Generally, the sensor device 4 is arranged upstream of the row of first openings 11 with respect to the second, chordwise direction T1. The sensor device 4 may also comprise one or more sensors to capture an angle of attack α of the fluid flow S relative to the second direction T1. As schematically shown in Fig. 1, the controller 3 is communicatively connected to the sensor device 4 and configured to control the actuators 21, 22, 23 based on the captured sensor data, in particular based on the captured free stream velocity. It should be understood that the sensor device 4 may also be realized and arranged separately from the fluid body 1. For example, the sensor device 4 may be part of a sensor system of the aircraft 100.

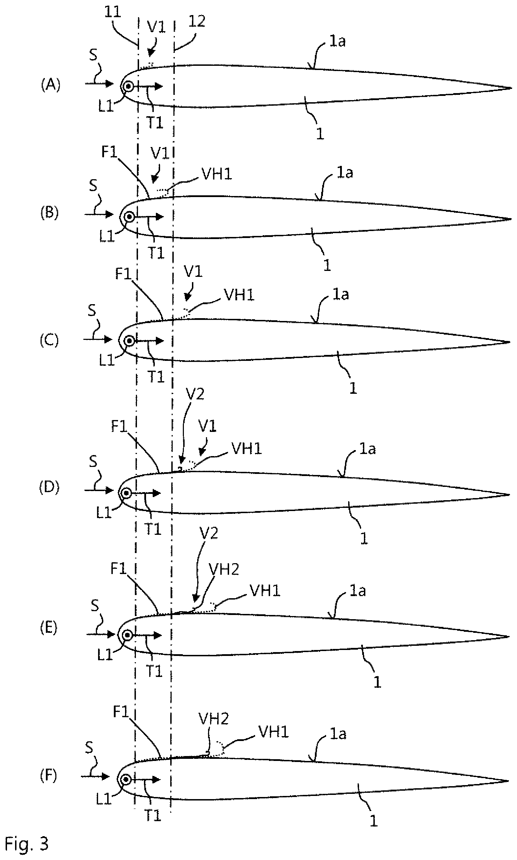

Fig. 3 shows a flow body 1 in a more schematic fashion and illustrates in views (A) to (F) subsequent states of a fluid flow S flowing along the flow surface 1a of the flow body 1 when a method of active flow control is performed, according to an example not covered by the claimed invention. The method will be explained in more detail below by referring to the flow body 1 as described above. Generally, steps of ejecting control fluid are performed by controlling the first, second or - if applicable - third actuators 21, 22, 23 by means of the controller 3. In the following, it is referred to a flow body system 10 comprising flow control actuators 21, 22, 23 configured to eject control fluid through respective openings 11, 12, 13 of the flow surface 1a. However, the method is not limited thereto and may use any other type of flow control actuators, e.g. plasma actuators or others, coupled to actuation sites of the flow surface 1a and configured to introduce vortex structures and local high-velocity fields into a fluid flow flowing along the flow surface 1a. The flow body 1 of Fig. 3 comprises one or more first openings 11 as first actuation sites and one or more second openings 12 as second actuation sites. Further, the flow body system 10 of Fig. 3 comprises first and second actuators 21, 22.

As shown in view (A) of Fig. 3 according to an example not covered by the claimed invention, in a first step, the controller 3 controls the first flow control actuators 21 to eject control fluid into the fluid flow S through the first openings 11 over a first predetermined period of time. Thereby, a first vortex structure V1 as indicated by the dotted line in Fig. 3 is introduced into the fluid flow S. The first vortex structure V1 in particular may be a so called horseshoe vortex having a head vortex VH1 and two longitudinal vortices VL1, VL2 extending transverse to the head vortex VH1. The shape of the first vortex structure V1, thus, resembles the shape of a horseshoe. The head vortex VH1 and the longitudinal vortices VL1, VL2 define a first local velocity field F1 in the fluid flow S, where the fluid comprises a higher velocity than in the boundary layer surrounding the first vortices structure V1.

As schematically shown in view (B) of Fig. 3 according to an example not covered by the claimed invention, the first vortices structure V1 propagates downstream along the second, chordwise direction T1. In view (C) of Fig. 3, the head vortex VH1 of the first vortex structure V1 is shown to have propagated to a location downstream of the second openings 12. Consequently, the first local velocity field F1 is present upstream and downstream of the second openings 12. When the head vortex VH1 of the first vortex structure V1 has propagated with the fluid flow S downstream the second ejection or actuation site 12, the controller 3 controls the second flow control actuators 22 to eject control fluid through the second openings 22 for a second predetermined amount of time. Thereby, a second vortex structure V2, in particular a horseshoe vortex is introduced into the first local velocity field F1. The controller 3 may activate the second actuators 22 for example based on the free stream velocity captured with the optional sensor device 4. That is, the controller 3 may determine from the captured free stream velocity and the known distance between the first and second openings 11, 12 in the body transverse direction T1 a time that the head vortex VH1 of the first vortex structure V1 requires to reach the second openings 12. It is also possible to provide a fixed or scheduled delay, that is, a fixed lapse of time for controlling the second actuators 22 after controlling the first actuators 21.

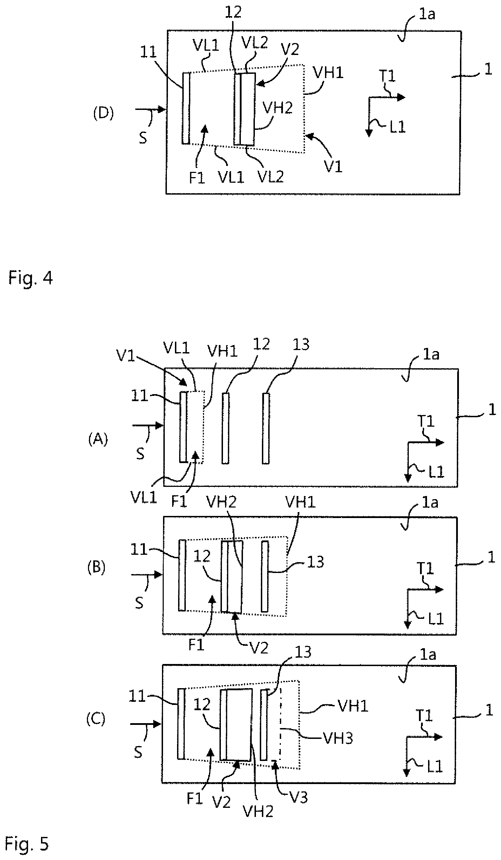

As shown in views (E) and (F) of Fig. 3 according to an example not covered by the claimed invention, the second vortex structure V2 travels or propagates downstream following the first vortex structure V1, thereby, energizing the boundary layer of the fluid flow S which helps to prevent flow separation. It is a particular advantage of the method that the second vortex structure V2 is introduced into the local high-velocity field of the first vortex structure V1 since this allows generation of the second vortex structure with reduced propagation loss which, among others, increases life time of the second vortex structure V2. Another benefit becomes more obvious from Fig. 4 which shows a top view to the flow surface 1a corresponding to the point of time of view (D) of Fig. 3 according to an example not covered by the claimed invention. As schematically illustrated in Fig. 4, the first vortex structure V1 widens when propagating downstream. In particular, the longitudinal vortices VL1 of the first vortex structure V1 drift away from each other with increased distance from the first opening 11. This eases placing the second vortex structure V2 into the first local velocity field F1, e.g. when the flowing direction of the fluid flow S is not aligned with second direction T1. Further, by making the first predetermined period of time during which control fluid is ejected through the first openings 11 sufficiently long and by starting the ejection of control fluid through the second openings 12 sufficiently late, placing the second vortex structure V2 into the first local velocity field F1 is further eased. This allows omitting complicated measuring equipment to measure propagation of the head vortex VH1 of the first vortex structure V1.

In accordance with the claimed invention, Fig. 5 exemplarily shows top views of a flow body 1 at three subsequent points of time in views (A), (B), and (C), wherein the flow body 1 comprises first, second, and third openings 11, 12, 13, e.g. as shown in Fig. 1, or generally actuation sites. In addition to the method described by reference to Figs. 3 and 4, the controller 3 controls the third actuators 23 to eject control fluid through the third openings 13 when the head vortex VH1 of the first vortex structure V1 has propagated with the fluid flow S to a location downstream the third ejection site 13. In the example of Fig. 5, in view (B), the head vortex VH1 of the first vortex structure V1 has propagated downstream the second openings 12 and in this exemplary case also downstream the third openings 13, and the controller has activated the second actuators 22 to eject fluid in order to generate the second vortex structure V2 into the first local velocity field F1 as described above. As shown in view (C) of Fig. 5, the controller 3 may activate the third actuators 23 to eject control fluid through the third openings 13 for introducing the third vortex structure V3 after activation of the second actuators 22, however, before a head vortex VH2 of the second vortex structure V2 has reached the third opening 13 or actuation site. It is, however, also possible to synchronously activate the second and third actuators 22, 23, when the head vortex VH1 of the first vortex structure V1 has propagated downstream the third openings 13. Alternatively, it is also possible that the controller 3 activates the third flow control actuators 23 after the second flow control actuators 22 to introduce the third vortex structure V3 into the first local velocity field F1 after a second local velocity field F2 generated by introducing the second vortex structure V2 has already propagated downstream the third actuation site 13. As becomes apparent from view (C) of Fig. 5, a series of consecutive vortices which are highly energized and, therefore, stable due to the first local high-velocity field F1 can be easily and reliably generated.

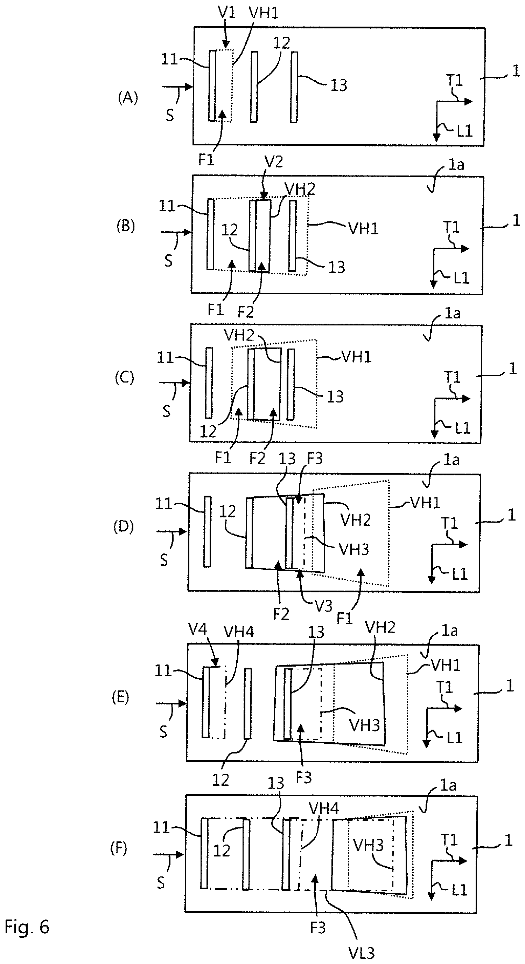

In accordance with an example not covered by the claimed invention, Fig. 6 schematically illustrates top views (A) to (D) of the flow body 1 at subsequent steps of time, wherein the flow body 1 comprises first, second, and third openings 11, 12, 13 or actuation sites. Views (A) and (B) of Fig. 6 correspond basically to views (A) and (B) of Fig. 5. That is, a second vortex structure V2 in the form of a horseshoe vortex is introduced into the first local velocity field F1 when the first head vortex VH1 of the first vortex structure has passed the second openings 12. As shown in view (C) of Fig. 6, the head vortex VH1 of the first vortex structure V1 propagates further downstream and a head vortex VH2 of the second vortex structure V2 propagates downstream towards the third openings 13. Moreover, the first actuators 21 may be deactivated at a point of time, when the first head vortex has propagated downstream the second opening or actuation site 12. Thereby, as can be taken from view (C) in Fig. 6, the first velocity field F1 also propagates downstream.

As shown in view (D) of Fig. 6, differing to Fig. 5, a third vortex structure V3 is not introduced into the first local velocity field F1 but into a second local velocity field F2 generated or defined by the second vortex structure V2. Therefore, the controller 3 controls the third actuators 23 to eject control fluid when the head vortex VH2 of the second vortex structure V2 has propagated with the fluid flow S downstream the third ejection site 13. In the exemplary view (D) of Fig. 6, the first local velocity field F1 has already propagated downstream the third opening or actuation site 13. That is, the third vortex structure V3 is introduced into the second local velocity field F2 after the first local velocity field F1 has propagated downstream the third actuation site 13. However, it is also possible to introduce the third vortex structure V3 into the second local velocity field F2 when the first local velocity field F1 is still present upstream of the third actuation site 13.

View (E) of Fig. 6 shows a later point of time than view (D) of Fig. 6. As can be seen, the head vortex VH2 of the second vortex structure has quickly caught up to the head vortex VH1 of the first vortex structure V1 due to its highly energized state and the head vortex VH3 of the third vortex structure V3 propagates downstream within the second local velocity field F2 of the second vortex structure V2.

Moreover, views (E) and (F) of Fig. 6 show optional further steps of the method. As becomes apparent by comparing views (B) and (C) of Fig. 6, controller 3 may control the first actuators 21 to stop ejecting control fluid after a first predetermined period or amount of time sufficiently long that the head vortex VH1 of the first vortex structure V1 reaches and passes at least the second openings 12. Similar, as becomes apparent by comparing views (D) and (E) of Fig. 6, controller 3 may control the second actuators 22 to stop ejecting control fluid after a second predetermined period or amount of time sufficiently long that the head vortex VH2 of the second vortex structure V2 reaches and passes the third openings 13. As schematically shown in view (E) of Fig. 6, the controller 3 may further control the first actuators 21 again after the first period of time to eject control fluid through the first openings. Thereby, a fourth vortex structure V4 is into the fluid flow S. The controller 3 further controls the third actuators 23 to continuously eject control fluid, or generally to generate third local velocity field F3, during third predetermined period or amount of time sufficiently long for a head vortex VH4 of the fourth vortex structure V4 to propagate downstream the third ejections site 13. Since the third vortex structure V3 generates a third local high-velocity field F3, the head vortex VH4 of the fourth vortex structure V4 is energized and, hence, stabilized when passing the third openings 13. Thereby, the fourth vortex structure V4 may travel further downstream helping to energize the boundary layer of the fluid flow S.

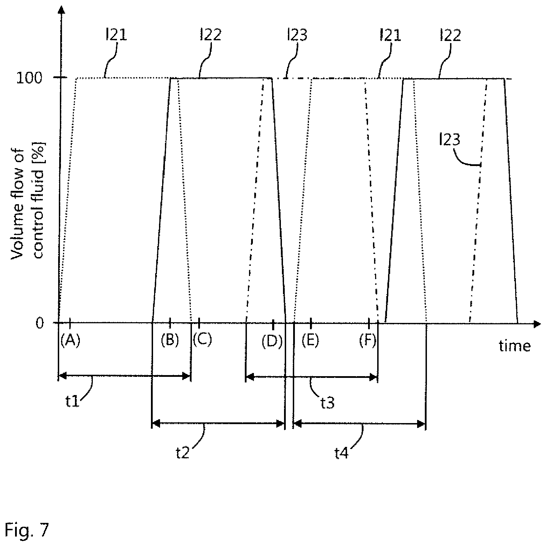

Fig. 7 schematically shows a diagram where the time is shown with a horizontal axis and a volume flow of control fluid in percentage of a maximum possible volume flow is shown with a vertical axis. In Fig. 7, the dotted line I21 indicates a volume flow of control fluid caused by the first actuators 21, the full line l22 indicates a volume flow of control fluid caused by the second actuators 22, and the chain line I23 indicates a volume flow of control fluid caused by the third actuators 23. It should be understood that in Fig. 7, lines l21, l22, and l23 show an activation state of the actuators 21, 22, 23 over time and that vortex structures and velocity field generated by activating the actuators 21, 22, 23 at a respective actuation site 11, 12, 13 of the flow surface 1a require a certain propagation time to reach a subsequent actuation site 12, 13. In Fig. 7 the states (A) to (F) corresponding to Fig. 6 are indicated along the horizontal axis.

As shown in Fig. 7, first, the first actuators 21 are controlled to eject control fluid over a first period of time t1 to generate the first local velocity field F1 by introducing the first vortex structure V1 (view (A) of Fig. 6). Before the first period of time t1 ends, the second actuators 22 are controlled to eject control fluid over a second period of time t2 to introduce the second vortex structure V2 into the first local velocity field F1 (views (B) and (C) of Fig. 6). Before the second period of time t2 ends, the third actuators 23 are controlled to eject control fluid over a third period of time t3 to introduce the third vortex structure V3 into the second local velocity field F2 generated by the second vortex structure V2 (views (D) and (E) of Fig. 6). Shortly after activating the third actuators 23, the first actuators 21 are controlled again to eject control fluid in order to generate the fourth vortex structure V4 (view (E) of Fig. 6). The third period of time t3 is sufficiently long that the head vortex VH4 of the fourth vortex structure V4 reaches and passes the third openings 13 when the third actuators 23 are still ejecting control fluid through the third openings 13 (view (F) of Fig. 6). The first actuators 21 may be controlled to eject control fluid in order to generate the fourth vortex structure V4 for a fourth period of time t4 which may correspond to the first period of time t1. As indicated in Fig. 7, optionally, the cycle may be repeated by again introducing a second vortices structure V2 and a third vortices structure V3 as described by reference to Fig. 6, wherein the fourth vortex structure V4 and the corresponding local velocity field corresponds to the first vortex structure V1.

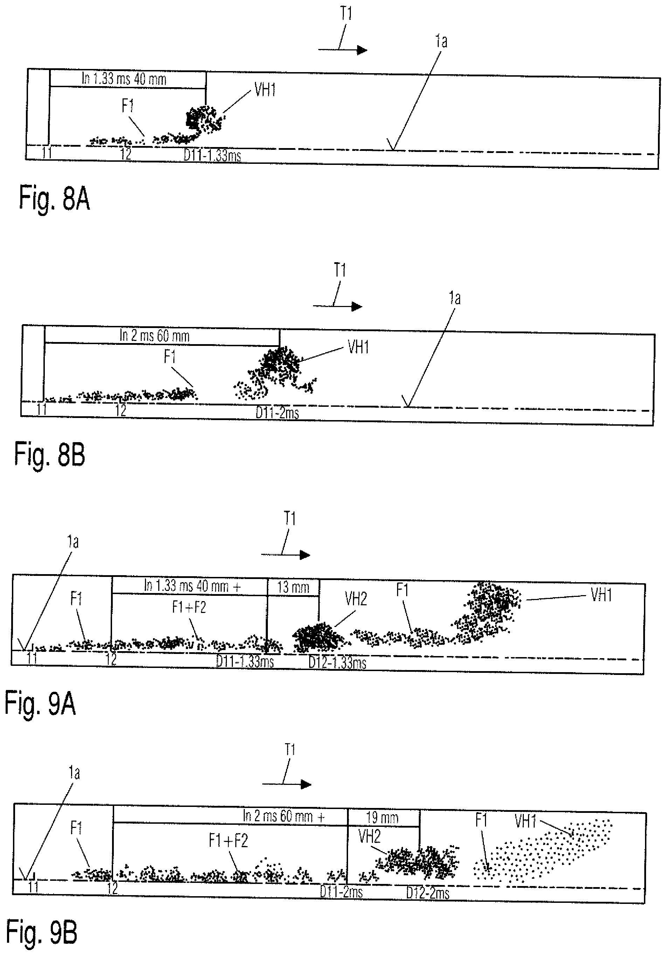

Figs. 8A, 8B, 9A, and 9B show a series of PIV-images (PIV is an abbreviation for the term "Particle Image Velocimetry") obtained in an experimental setup and are intended to further illustrate the technical effects and benefits of the invention. In the experimental setup shown in Figs. 8A, 8B, 9A, and 9B, a flow of air flows along an even flow surface 1a with a free stream velocity of approximately 30 m/s. The flow surface 1a comprise a first opening 11 as a first actuation site and a second opening 12 as second actuation site, wherein the second opening 12 is spaced to the first opening 11 in the second direction T1, which corresponds to the flow direction of the air flow, by 20 mm. Through the first and second openings 11, 12 a jet of air can be ejected as a control fluid for introducing vortices and local velocity fields into the fluid flow. The experimental setup, thus, substantially corresponds to the flow body system 10 shown in Figs. 3 and 4. The underlying concepts, of course, also apply to the systems 10 and methods shown in the remaining Figures.

Fig. 8A shows a state 1.33 ms after starting ejection of air through the first opening 11. As can be seen in Fig. 8A, a head vortex VH1 of a first vortex structure V1 introduced into the boundary layer of the air flow has propagated downstream with the flow by a distance D11-1.33ms of approximately 40 mm, that is, downstream of the second opening 12. The head vortex VH1 can be identified in Fig. 8A by the darker colouring of the image representing the ejected control fluid. Further, it can be seen in Fig. 8A that a local velocity field F1 is present close to the flow surface 1a where the fluid comprises a higher velocity than in the surrounding boundary layer. The local velocity field F1 results from introducing the first vortex structure V1 by continuously ejecting air through the first opening.

Fig. 8B shows a state subsequent to Fig. 8A, namely, 2.0 ms after starting ejection of air through the first opening 11. As can be seen, the head vortex VH1 of the first vortex structure V1 has propagated further downstream, namely, by a distance D11-2ms of approximately 60 mm downstream of the first opening 11. The size of the head vortex VH1 of the first vortex structure V1 can be seen to have increased which corresponds to decreased energy density in the vortex V1. Since air is still being ejected through the first opening 11 in the state shown in Fig. 8B, the first velocity field F1 is still present between the first opening 11 and the head vortex VH1 of the first vortex structure V1.

Fig. 9A shows a state subsequent to the state shown in Fig. 8B, namely, 1.33 ms after starting ejection of air through the second opening 12. As can be seen in Fig. 9A, the velocity field F1 resulting from ejection of air through the first opening 11 is still present, the head vortex VH1 of the first vortex structure V1 has propagated further downstream and is already dissipated to a huge amount. By ejecting air through the second opening 12, a second vortex structure V2 having a second head vortex VH2 has been introduced into the first velocity field F1.

The second head vortex VH2 can be seen in Fig. 9A as a dark area downstream of the second opening 12. In particular, the second head vortex VH2 has propagated downstream of the second opening 12 by a distance D12-1.33ms of approximately 53 mm. Compared to Fig. 8A, which shows the first head vortex VH1 after the same time after ejection of air through the first opening 11, the second head vortex VH2 has propagated about 13 mm further than the first head vortex VH1. It can be determined that the first head vortex VH1 propagates with a velocity of approximately 30 m/s while the second head vortex VH2 propagates with a velocity of approximately 40 m/s. Therefore, by introducing the second vortex structure V2 into the local velocity field F1 of the first vortex structure V1, the propagation velocity and, generally, energy density of second vortex structure V2 is remarkably increased.

Fig. 9B shows a state subsequent to the state shown in Fig. 9A, namely, 2.0 ms after starting ejection of air through the second opening 12. As can be seen, the first head vortex VH1 is nearly completely dissipated. The ejection of air through the first opening 11 has been stopped. Therefore, an upstream end of the first local velocity field F1 propagates downstream from the first opening 11. In Fig. 9B, the second head vortex VH2 has propagated downstream by a distance D12-2ms of about 79 mm in total from the second opening 12. Compared to Fig. 8B, which shows the first head vortex VH1 after the same time after ejection of air through the first opening 11, the second head vortex VH2 has propagated about 19 mm further than the first head vortex VH1.

From a comparison of Figs. 9A and 9B with Figs. 8A and 8B, it is also visible that the second head vortex VH2 remains closer to the flow surface 1a than the first head vortex VH1 which tends to side track the boundary layer close to the flow surface 1a. Since the second head vortex VH2 remains close to the flow surface 1a, the boundary layer of the air flow is more efficiently energized which helps to prevent flow separation.

By directly comparing Fig. 8A with Fig. 9A, one can see that the first head vortex VH1 1.33 ms after ejection of air through the first opening 11 has approximately the same size than the second head vortex VH2 1.33 ms after ejection of air through the second opening 11. Similar, by comparing Fig. 8B and Fig. 9B, one can see that the first head vortex VH1 2.0 ms after ejection of air through the first opening 11 has approximately the same size than the second head vortex VH2 2.0 ms after ejection of air through the second opening 11. However, it should be noted, that the second head vortex VH2 in the same time has travelled a longer distance than the first head vortex VH1. Since the vortices VH1, VH2 lose energy along their way downstream, one can follow that the second head vortex VH2 comprises a higher energy density and, thus, better energizes the boundary layer.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents as long as they fall within the scope of the appended claims. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference signs

- 1: flow body
- 1a: flow surface
- 2: leading edge
- 2a: first, upper surface
- 2b: second, lower surface
- 3: controller
- 4: sensor device
- 10: flow body system
- 11: first actuation site, first openings
- 12: second actuation site, second openings
- 13: third actuation site, third openings
- 21: first flow control actuators
- 22: second flow control actuators
- 23: third flow control actuators
- 31: input interface
- 32: output interface
- 100: aircraft
- 101: wing
- 102: vertical stabilizer
- 103: horizontal stabilizer
- 110: engine
- 112: engine housing

- D11: propagation distance
- D12: propagation distance
- F1: first local velocity field
- F2: second local velocity field
- F3: third local velocity field
- I21: dotted line
- I22: full line
- I23: chain line
- L1: first direction
- S: fluid flow
- T1: second direction
- t1: first period of time
- t2: second period of time
- t3: third period of time
- t4: fourth period of time
- V1: first vortex structure
- V2: second vortex structure
- V3: third vortex structure
- V4: fourth vortex structure
- VL1: longitudinal vortices of first vortex structure
- VL2: longitudinal vortices of second vortex structure
- VL3: longitudinal vortices of third vortex structure
- VH1: head vortex of the first vortex structure
- VH2: head vortex of the second vortex structure
- VH3: head vortex of the third vortex structure
- VH4: head vortex of fourth vortex structure
- α: angle of attack, pitch angle

## Claims

1. Method for active flow control of a fluid flow (S) that flows along a flow surface (1a), the method comprising:
generating a first local velocity field (F1) in the fluid flow (S) by introducing a first vortex structure (V1) into the fluid flow (S) by means of a first flow control actuator (21) coupled to a first actuation site (11) of the flow surface (1a);
introducing a second vortex structure (V2) into the first local velocity field (F1) by means of a second flow control actuator (22) coupled to a second actuation site (12) of the flow surface (1a) located downstream of the first actuation site (11) when a head vortex (VH1) of the first vortex structure (V1) has propagated with the fluid flow (S) downstream the second actuation site (12) and the first local velocity field (F1) is present upstream and downstream of the second actuation site (12), so that the second vortex structure (V2) travels or propagates downstream following the first vortex structure (V1); and
introducing a third vortex structure (V3) into the first local velocity field (F1) by means of a third flow control actuator (23) coupled to a third actuation site (13) of the flow surface (1a) located downstream of the second actuation site (12) when the head vortex (VH1) of the first vortex structure (V1) has propagated with the fluid flow (S) downstream the third actuation site (13), wherein the third vortex structure (V3) is introduced into the first local velocity field (F1) after a second local velocity field (F2) generated by introducing the second vortex structure (V2) has propagated downstream the third actuation site (13) or before a head vortex (VH2) of the second vortex structure (V2) has reached the third actuation site (13).

2. Method according to claim 1, wherein the first flow control actuator (21) is kept activated during activation of the second flow control actuator (21) and after deactivation of the second flow control actuator (21).

3. Method according to claim 1 or 2, further comprising:
introducing a fourth vortex structure (V4) into the fluid flow (S) by means of the first flow control actuator (21), wherein the third flow control actuator continuously generates a third local velocity field (F3) until a head vortex (VH4) of the fourth vortex structure (V4) has propagated downstream the third actuation site (13) with the fluid flow (S).

4. Method according to any one of the preceding claims, further comprising:
capturing a free stream velocity of the fluid flow (S) upstream of the first actuation site (11); and
controlling a delay of activating the second actuator based on the captured free stream velocity.

5. Method according to any one claims 1 to 3, wherein a delay of activating the second actuator is controlled according to a predefined schedule.

6. Flow body system (10), comprising:
a flow body (1) defining a flow surface (1a), the flow body (1) comprising:
a group of first flow control actuators (21) coupled to the flow surface (1a) at a row of first actuation sites (11) being spaced to oneanother in the first direction (L1), the first flow control actuators (21) being configured to generate first vortex structures (V1) and corresponding first local velocity fields (F1) in a fluid flow (S) flowing along the flow surface (1a) along a second direction (T1) which extends transverse to the first direction (L1) ;
a group of second flow control actuators (22) coupled to the flow surface (1a) at a row of second actuation sites (12) being spaced to oneanother in the first direction (L1) and being positioned spaced to the row of first actuation sites (11) in the second direction (T1), the second flow control actuators (22) being configured to generate second vortex structures (V2) and corresponding second local velocity fields (F2) in the fluid flow (S) ; and
a group of third flow control actuators (23) being coupled to the flow surface (1a) at a row of third actuation sites (13) and being configured to generate third vortex structures (V3) and corresponding third local velocity fields (F3), the third actuation sites (13) being spaced to oneanother in the first direction (L1) and being positioned spaced to the row of second actuation sites (12) in the second direction (T1); and
a controller (3) communicatively connected to the first, second, and third flow control actuators (21; 22; 23) and configured to control the first, second, and third flow control actuators (21; 22; 23) in accordance with a method according to any one of the preceding claims.

7. Flow body system (10) according to claim 6, wherein the first actuation sites (11) are formed by first openings formed in the flow surface (1a), wherein the first flow control actuators (21) are coupled to the first openings and configured to eject control fluid through the first openings for generating the first vortex structures (V1) and the corresponding first local velocity fields (F1); and
wherein the second actuation sites (12) are formed by second openings formed in the flow surface (1a), wherein the second flow control actuators (22) are coupled to the second openings and configured to eject control fluid through the second openings for generating the second vortex structures (V2) and the corresponding second local velocity fields (F2).

8. Flow body system (10) according to claim 6, wherein the first actuators (11) and the second actuators (12) are realized as plasma actuators.

9. Flow body system (10) according to any one of claims 6 to 8, wherein the third actuation sites (13) are formed by third openings (13) formed in the flow surface (1a), wherein the third actuators (23) are configured to eject control fluid through the third openings for generating the third vortex structures (V3) and the corresponding third local velocity fields (F3).

10. Flow body system (10) according to any one of claims 6 to 8, wherein the third actuators (23) are realized as plasma actuators.

11. Flow body system (10) according to any one of claims 6 to 10, further comprising:
a sensor device (4) configured to capture a free stream velocity of the fluid flow (S), the sensor device (4) being arranged upstream of the row of first openings (11) with respect to the second direction (T1);
wherein the controller (3) is communicatively connected to the sensor device (4) and configured to control the second actuators (22) to be activated with a delay based on the captured free stream velocity.

12. Flow body system (10) according to any one of claims 6 to 10, wherein the controller (3) is configured to read a data memory storing a lookup table storing a predefined schedule for activating the first and second actuators (21; 22).

13. Aircraft (100) comprising a flow body system (100) according to any one of claims 6 to 12.

## Patentansprüche

1. Verfahren zur aktiven Strömungssteuerung eines Fluidstroms (S), der entlang einer Strömungsfläche (1a) strömt, wobei das Verfahren umfasst:
Erzeugen eines ersten lokalen Geschwindigkeitsfeldes (F1) im Fluidstrom (S) durch Einbringen einer ersten Wirbelstruktur (V1) in den Fluidstrom (S) mittels eines ersten Strömungssteuerungsaktuators (21), der mit einer ersten Betätigungsstelle (11) der Strömungsfläche (1a) gekoppelt ist;
Einbringen einer zweiten Wirbelstruktur (V2) in das erste lokale Geschwindigkeitsfeld (F1) mittels eines zweiten Strömungssteuerungsaktuators (22), der mit einer zweiten Betätigungsstelle (12) der Strömungsfläche (1a) gekoppelt ist, die sich stromabwärts der ersten Betätigungsstelle (11) befindet, wenn sich ein Kopfwirbel (VH1) der ersten Wirbelstruktur (V1) mit dem Fluidstrom (S) stromabwärts der zweiten Betätigungsstelle (12) ausgebreitet hat und das erste lokale Geschwindigkeitsfeld (F1) stromaufwärts und stromabwärts der zweiten Betätigungsstelle (12) vorhanden ist, sodass sich die zweite Wirbelstruktur (V2) stromabwärts im Anschluss an die erste Wirbelstruktur (V1) fortbewegt oder ausbreitet;
und
Einbringen einer dritten Wirbelstruktur (V3) in das erste lokale Geschwindigkeitsfeld (F1) mittels eines dritten Strömungssteuerungsaktuators (23), der mit einer dritten Betätigungsstelle (13) der Strömungsfläche (1a) gekoppelt ist, die sich stromabwärts der zweiten Betätigungsstelle (12) befindet, wenn sich der Kopfwirbel (VH1) der ersten Wirbelstruktur (V1) mit dem Fluidstrom (S) stromabwärts der dritten Betätigungsstelle (13) ausgebreitet hat,
wobei die dritte Wirbelstruktur (V3) in das erste lokale Geschwindigkeitsfeld (F1) eingebracht wird, nachdem sich ein zweites lokales Geschwindigkeitsfeld (F2), das durch Einbringen der zweiten Wirbelstruktur (V2) erzeugt wurde, stromabwärts der dritten Betätigungsstelle (13) ausgebreitet hat oder bevor ein Kopfwirbel (VH2) der zweiten Wirbelstruktur (V2) die dritte Betätigungsstelle (13) erreicht hat.

2. Verfahren gemäß Anspruch 1, wobei der erste Strömungssteuerungsaktuator (21) während der Aktivierung des zweiten Strömungssteuerungsaktuators (21) und nach der Deaktivierung des zweiten Strömungssteuerungsaktuators (21) aktiviert bleibt.

3. Verfahren gemäß Anspruch 1 oder 2, ferner umfassend:
Einbringen einer vierten Wirbelstruktur (V4) in den Fluidstrom (S) mittels des ersten Strömungssteuerungsaktuators (21), wobei der dritte Strömungssteuerungsaktuator kontinuierlich ein drittes lokales Geschwindigkeitsfeld (F3) erzeugt, bis sich ein Kopfwirbel (VH4) der vierten Wirbelstruktur (V4) mit dem Fluidstrom (S) stromabwärts der dritten Betätigungsstelle (13) ausgebreitet hat.

4. Verfahren gemäß einem der vorhergehenden Ansprüche, ferner umfassend:
Erfassen einer freien Strömungsgeschwindigkeit des Fluidstroms (S) stromaufwärts der ersten Betätigungsstelle (11); und
Steuern einer Verzögerung der Aktivierung des zweiten Aktuators basierend auf der erfassten freien Strömungsgeschwindigkeit.

5. Verfahren gemäß einem der Ansprüche 1 bis 3, wobei eine Verzögerung der Aktivierung des zweiten Aktuators gemäß einem vordefinierten Zeitplan gesteuert wird.

6. Strömungskörpersystem (10), umfassend:
einen Strömungskörper (1), der eine Strömungsfläche (1a) definiert, wobei der Strömungskörper (1) umfasst:
eine Gruppe aus ersten Strömungssteuerungsaktuatoren (21), die mit der Strömungsfläche (1a) an einer Reihe von ersten Betätigungsstellen (11) gekoppelt sind, die in der ersten Richtung (L1) voneinander beabstandet sind, wobei die ersten Strömungssteuerungsaktuatoren (21) dazu ausgelegt sind, erste Wirbelstrukturen (V1) und entsprechende erste lokale Geschwindigkeitsfelder (F1) in einem Fluidstrom (S) erzeugen, der entlang der Strömungsfläche (1a) entlang einer zweiten Richtung (T1) strömt, die sich quer zur ersten Richtung (L1) erstreckt;
eine Gruppe aus zweiten Strömungssteuerungsaktuatoren (22), die mit der Strömungsfläche (1a) an einer Reihe von zweiten Betätigungsstellen (12) gekoppelt sind, die in der ersten Richtung (L1) voneinander beabstandet sind und in der zweiten Richtung (T1) von der Reihe der ersten Betätigungsstellen (11) beabstandet sind, wobei die zweiten Strömungssteuerungsaktuatoren (22) dazu ausgelegt sind, zweite Wirbelstrukturen (V2) und entsprechende zweite lokale Geschwindigkeitsfelder (F2) in dem Fluidstrom (S) zu erzeugen; und
eine Gruppe aus dritten Strömungssteuerungsaktuatoren (23), die mit der Strömungsoberfläche (1a) an einer Reihe von dritten Betätigungsstellen (13) gekoppelt und dazu ausgelegt sind,, dritte Wirbelstrukturen (V3) und entsprechende dritte lokale Geschwindigkeitsfelder (F3) zu erzeugen, wobei die dritten Betätigungsstellen (13) in der ersten Richtung (L1) voneinander beabstandet sind und in der zweiten Richtung (T1) von der Reihe zweiter Betätigungsstellen (12) beabstandet sind; und
eine Steuereinrichtung (3), die kommunikativ mit dem ersten, zweiten und dritten Durchflusssteuerungsaktuator (21; 22; 23) verbunden und dazu ausgelegt ist, den ersten, zweiten und dritten Ströungssteuerungsaktuator (21; 22; 23) gemäß einem Verfahren gemäß einem der vorhergehenden Ansprüche zu steuern.

7. Strömungskörpersystem (10) gemäß Anspruch 6, wobei die ersten Betätigungsstellen (11) durch erste Öffnungen gebildet werden, die in der Strömungsfläche (1a) ausgebildet sind, wobei die ersten Strömungssteuerungsaktuatoren (21) mit den ersten Öffnungen gekoppelt sind und dazu ausgelegt sind, Steuerungsfluid durch die ersten Öffnungen auszustoßen, um die ersten Wirbelstrukturen (V1) und die entsprechenden ersten lokalen Geschwindigkeitsfelder (F1) zu erzeugen; und
wobei die zweiten Betätigungsstellen (12) durch zweite Öffnungen gebildet werden, die in der Strömungsfläche (1a) ausgebildet sind, wobei die zweiten Strömungssteuerungsaktuatoren (22) mit den zweiten Öffnungen gekoppelt und dazu ausgelegt sind, Steuerungsfluid durch die zweiten Öffnungen auszustoßen, um die zweiten Wirbelstrukturen (V2) und die entsprechenden zweiten lokalen Geschwindigkeitsfelder (F2) zu erzeugen.

8. Strömungskörpersystem (10) gemäß Anspruch 6, wobei die ersten Aktuatoren (11) und die zweiten Aktuatoren (12) als Plasmaaktuatoren realisiert sind.

9. Strömungskörpersystem (10) gemäß einem der Ansprüche 6 bis 8, wobei die dritten Betätigungsstellen (13) durch in der Strömungsfläche (1a) ausgebildete dritte Öffnungen (13) gebildet werden, wobei die dritten Aktuatoren (23) dazu ausgelegt sind, Steuerungsfluid durch die dritten Öffnungen auszustoßen, um die dritten Wirbelstrukturen (V3) und die entsprechenden dritten lokalen Geschwindigkeitsfelder (F3) zu erzeugen.

10. Strömungskörpersystem (10) gemäß einem der Ansprüche 6 bis 8, wobei die dritten Aktuatoren (23) als Plasmaaktuatoren realisiert sind.

11. Strömungskörpersystem (10) gemäß einem der Ansprüche 6 bis 10, ferner umfassend:
eine Sensorvorrichtung (4), die dazu ausgelegt ist, eine freie Strömungsgeschwindigkeit des Fluidstroms (S) zu erfassen, wobei die Sensorvorrichtung (4) in Bezug auf die zweite Richtung (T1) stromaufwärts der Reihe der ersten Öffnungen (11) angeordnet ist;
wobei die Steuereinrichtung (3) kommunikativ mit der Sensorvorrichtung (4) verbunden und dazu ausgelegt ist, die zweiten Aktuatoren (22) so zu steuern, dass sie mit einer Verzögerung basierend auf der erfassten Geschwindigkeit der freien Strömung aktiviert werden.

12. Strömungskörpersystem (10) gemäß einem der Ansprüche 6 bis 10, wobei die Steuereinrichtung (3) dazu ausgelegt ist, einen Datenspeicher auszulesen, in dem eine Nachschlagetabelle gespeichert ist, die einen vordefinierten Zeitplan für die Aktivierung des ersten und des zweiten Aktuators (21; 22) speichert.

13. Luftfahrzeug (100) mit einem Strömungskörpersystem (100) gemäß einem der Ansprüche 6 bis 12.

## Revendications

1. Procédé pour commande active d'écoulement d'un écoulement de fluide (S) qui s'écoule le long d'une surface d'écoulement (1a), le procédé comprenant :
la génération d'un premier champ local de vitesse (F1) dans l'écoulement de fluide (S) en introduisant une première structure de tourbillon (V1) dans l'écoulement de fluide (S) au moyen d'un premier actionneur de commande d'écoulement (21) accouplé à un premier site d'actionnement (11) de la surface d'écoulement (1a) ;
l'introduction d'une deuxième structure de tourbillon (V2) dans le premier champ local de vitesse (F1) au moyen d'un deuxième actionneur de commande d'écoulement (22) accouplé à un deuxième site d'actionnement (12) de la surface d'écoulement (1a), situé en aval du premier site d'actionnement (11), lorsqu'un tourbillon de face (VH1) de la première structure de tourbillon (V1) s'est propagé avec l'écoulement de fluide (S) en aval du deuxième site d'actionnement (12) et le premier champ local de vitesse (F1) est présent en amont et en aval du deuxième site d'actionnement (12), pour que la deuxième structure de tourbillon (V2) se déplace ou se propage en aval suivant la première structure de tourbillon (V1) ; et
l'introduction d'une troisième structure de tourbillon (V3) dans le premier champ local de vitesse (F1) au moyen d'un troisième actionneur de commande d'écoulement (23) accouplé à un troisième site d'actionnement (13) de la surface d'écoulement (1a) situé en aval du deuxième site d'actionnement (12) lorsque le tourbillon de face (VH1) de la première structure de tourbillon (V1) s'est propagé avec l'écoulement de fluide (S) en aval du troisième site d'actionnement (13), dans lequel la troisième structure de tourbillon (V3) est introduite dans le premier champ local de vitesse (F1) après qu'un deuxième champ local de vitesse (F2) généré en introduisant la deuxième structure de tourbillon (V2) s'est propagé en aval du troisième site d'actionnement (13) ou avant qu'un tourbillon de face (VH2) de la deuxième structure de tourbillon (V2) ait atteint le troisième site d'actionnement (13).

2. Procédé selon la revendication 1, dans lequel le premier actionneur de commande d'écoulement (21) est maintenu activé durant l'activation du deuxième actionneur de commande d'écoulement (21) et après la désactivation du deuxième actionneur de commande d'écoulement (21).

3. Procédé selon la revendication 1 ou 2, comprenant en outre :
l'introduction d'une quatrième structure de tourbillon (V4) dans l'écoulement de fluide (S) au moyen du premier actionneur de commande d'écoulement (21), dans lequel le troisième actionneur de commande d'écoulement génère en continu un troisième champ local de vitesse (F3) jusqu'à ce qu'un tourbillon de face (VH4) de la quatrième structure de tourbillon (V4) se soit propagé en aval du troisième site d'actionnement (13) avec l'écoulement de fluide (S).

4. Procédé selon l'une quelconque des revendications précédentes, comprenant en outre :
la capture d'une vitesse de courant libre de l'écoulement de fluide (S) en amont du premier site d'actionnement (11) ; et
la commande d'un retard d'activation du deuxième actionneur sur la base de la vitesse capturée de courant libre.

5. Procédé selon l'une quelconque des revendications 1 à 3, dans lequel un retard de l'activation du deuxième actionneur est commandé selon un programme prédéfini.

6. Système de corps d'écoulement (10), comprenant :
un corps d'écoulement (1) définissant une surface d'écoulement (1a), le corps d'écoulement (1) comprenant :
un groupe de premiers actionneurs de commande d'écoulement (21) accouplés à la surface d'écoulement (1a) à une rangée de premiers sites d'actionnement (11) espacés les uns des autres dans la première direction (L1), les premiers actionneurs de commande d'écoulement (21) étant configurés pour générer des premières structures de tourbillon (V1) et des premiers champs locaux correspondants de vitesse (F1) dans un écoulement de fluide (S) s'écoulant le long de la surface d'écoulement (1a) le long d'une seconde direction (T1) qui s'étend transversalement à la première direction (L1) ;
un groupe de deuxièmes actionneurs de commande d'écoulement (22) accouplés à la surface d'écoulement (1a) à une rangée de deuxièmes sites d'actionnement (12) espacés les uns des autres dans la première direction (L1) et positionnés de façon espacée de la rangée de premiers sites d'actionnement (11) dans la seconde direction (T1), les deuxièmes actionneurs de commande d'écoulement (22) étant configurés pour générer des deuxièmes structures de tourbillon (V2) et des deuxièmes champs locaux correspondants de vitesse (F2) dans l'écoulement de fluide (S) ; et
un groupe de troisièmes actionneurs de commande d'écoulement (23) accouplés à la surface d'écoulement (1a) à une rangée de troisièmes sites d'actionnement (13) et configurés pour générer des troisièmes structures de tourbillon (V3) et des troisièmes champs locaux correspondants de vitesse (F3), les troisièmes sites d'actionnement (13) étant espacés les uns des autres dans la première direction (L1) et étant positionnés de façon espacée de la rangée de deuxièmes sites d'actionnement (12) dans la seconde direction (T1) ; et
une unité de commande (3) connectée en communication aux premiers, deuxièmes, et troisièmes actionneurs de commande d'écoulement (21 ; 22 ; 23) et configurée pour commander les premiers, deuxièmes, et troisièmes actionneurs de commande d'écoulement (21 ; 22 ; 23) conformément à un procédé selon l'une quelconque des revendications précédentes.

7. Système de corps d'écoulement (10) selon la revendication 6, dans lequel les premiers sites d'actionnement (11) sont formés par des premières ouvertures formées dans la surface d'écoulement (1a), dans lequel les premiers actionneurs de commande d'écoulement (21) sont accouplés aux premières ouvertures et configurés pour éjecter un fluide de commande à travers les premières ouvertures pour générer les premières structures de tourbillon (V1) et les premiers champs locaux correspondants de vitesse (F1) ; et
dans lequel les deuxièmes sites d'actionnement (12) sont formés par des deuxièmes ouvertures formées dans la surface d'écoulement (1a), dans lequel les deuxièmes actionneurs de commande d'écoulement (22) sont accouplés aux deuxièmes ouvertures et configurés pour éjecter un fluide de commande à travers les deuxièmes ouvertures pour générer les deuxièmes structures de tourbillon (V2) et les deuxièmes champs locaux correspondants de vitesse (F2).

8. Système de corps d'écoulement (10) selon la revendication 6, dans lequel les premiers actionneurs (11) et les deuxièmes actionneurs (12) sont réalisés sous la forme d'actionneurs plasma.

9. Système de corps d'écoulement (10) selon l'une quelconque des revendications 6 à 8, dans lequel les troisièmes sites d'actionnement (13) sont formés par des troisièmes ouvertures (13) formées dans la surface d'écoulement (1a), dans lequel les troisièmes actionneurs (23) sont configurés pour éjecter un fluide de commande à travers les troisièmes ouvertures pour générer les troisièmes structures de tourbillon (V3) et les troisièmes champs locaux correspondants de vitesse (F3).

10. Système de corps d'écoulement (10) selon l'une quelconque des revendications 6 à 8, dans lequel les troisièmes actionneurs (23) sont réalisés sous la forme d'actionneurs plasma.

11. Système de corps d'écoulement (10) selon l'une quelconque des revendications 6 à 10, comprenant en outre :
un dispositif capteur (4) configuré pour capturer une vitesse de courant libre de l'écoulement de fluide (S), le dispositif capteur (4) étant agencé en amont de la rangée de premières ouvertures (11) par rapport à la seconde direction (T1) ;
dans lequel l'unité de commande (3) est connectée en communication au dispositif capteur (4) et configurée pour commander les deuxièmes actionneurs (22) pour être activés avec un retard sur la base de la vitesse capturée de courant libre.

12. Système de corps d'écoulement (10) selon l'une quelconque des revendications 6 à 10, dans lequel l'unité de commande (3) est configurée pour lire une mémoire de données stockant une table de correspondance stockant un programme prédéfini pour activer les premiers et deuxièmes actionneurs (21 ; 22).

13. Aéronef (100), comprenant un système de corps d'écoulement (100) selon l'une quelconque des revendications 6 à 12.
